# EUROPEAN PATENT APPLICATION

(11) **EP 2 487 605 A1**
(43) Date of publication of application: **15.08.2012**
(21) Application number: 11153741.1
(22) Date of filing: 08.02.2011
(51) Int. Cl.: G06F 17/30, G09B 5/06

(54) **Managing multiple user presentations over wireless links**

(71) Applicant: Research In Motion Limited, Waterloo, ON N2L 3W8 (CA)
(72) Inventor: Wang, Sherman, Waterloo Ontario N2L 3W8 (CA); Lee, John Jong-Suk, Waterloo Ontario N2L 3L3 (CA); Santo, William Donald, Waterloo Ontario N2L 5Z5 (CA); Santo, Melissa Marie, East Waterloo Ontario N2K 0A2 (CA)
(74) Representative: Bryn-Jacobsen, Caelia

(57) **Abstract**

A presentation including a plurality of presentation files associated with a plurality of users is managed as follows. A wireless link is established between each user wireless device in a plurality of user wireless devices. A set of presentation files is received from each user wireless device. The set of presentation files is associated with a presentation. A set of presentation related data is received from at least one of the user wireless devices. The set of presentation related data at least identifies a plurality of presenters associated with the set of presentation files. A presentation priority associated with each of the presenters is identified. One of the presenters is selected based on the presentation priority that has been identified. Control of the presentation associated with the set of presentation files is allocated to a user wireless device that is associated with the presenter that has been selected.

## Description

### FIELD OF THE DISCLOSURE

The present disclosure generally relates to multimedia presentations, and more particularly to managing multimedia presentations associated with multiple users.

### BACKGROUND

Multimedia presentations allow users to present a wide variety of information to an audience. With conventional presentation systems a user device such as a notebook or desktop computer comprising a multimedia presentation is generally coupled to a display device such as a projector or a display. A conventional configuration for connecting the user device to the display device usually requires multiple wires to be utilized between the devices. This can be cumbersome and limits the placement of the user device and display device based on the length of the wires. Also, only one user device at a time is able to be coupled to the display device when using a wired configuration. Another configuration for connecting the user device and display device utilizes wireless links. This provides more freedom with respect to the placement of the devices and also allows multiple users to be coupled to the display device. However, these conventional wireless configurations inefficiently manage the multiple user devices and their data. Also, long delays are usually experienced when switching between presentations of the multiple users.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 is a block diagram of an operating environment according to one example;

FIG. 2 is a functional timing diagram for managing a presentation comprising a plurality a plurality of presentation files associated with a plurality of users according to one example;

FIG. 3 illustrates user device management data according to one example;

FIG. 4 illustrates presentation related data according to one example;

FIGs. 5-6 are flow diagrams for a multiple user, multiple presentation management process performed by wireless device illustrated in FIG. 1;

FIG. 7 is a block diagram of an electronic device and associated components in which the systems and methods disclosed herein may be implemented; and

FIG. 8 is a block diagram of another electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having" as used herein, are defmed as comprising (i.e., open language). The term "coupled" as used herein, is defined as "connected" although not necessarily directly, and not necessarily mechanically.

The term "wireless communication device" is intended to broadly cover many different types of devices that can wirelessly receive signals, and in most cases can wirelessly transmit signals, and may also operate in a wireless communication system. For example, and not for any limitation, a wireless communication device can include any one or a combination of the following: a two-way radio, a cellular telephone, a mobile phone, a smartphone, a two-way pager, a wireless messaging device, a laptop/computer, a personal digital assistant, and other similar devices.

Described below are systems and methods for managing a presentation comprising a plurality a plurality of presentation files associated with a plurality of users. In one example, a wireless link is established between each user wireless device in a plurality of wireless devices. A set of presentation files is received from each wireless device in the plurality of wireless devices over the wireless link. The set of presentation files are associated with a presentation. A set of presentation related data is received from at least one of the wireless devices in the plurality of wireless devices over the wireless link. The set of presentation related data at least identifies a plurality of presenters associated with the set of presentation files. A presentation priority associated with each of the presenters in the plurality of presenters is identified. One of the presenters is selected based on the presentation priority that has been identified. A control of the presentation associated with the set of presentation files is allocated to a wireless device in the plurality of wireless devices that is associated with the presenter that has been selected.

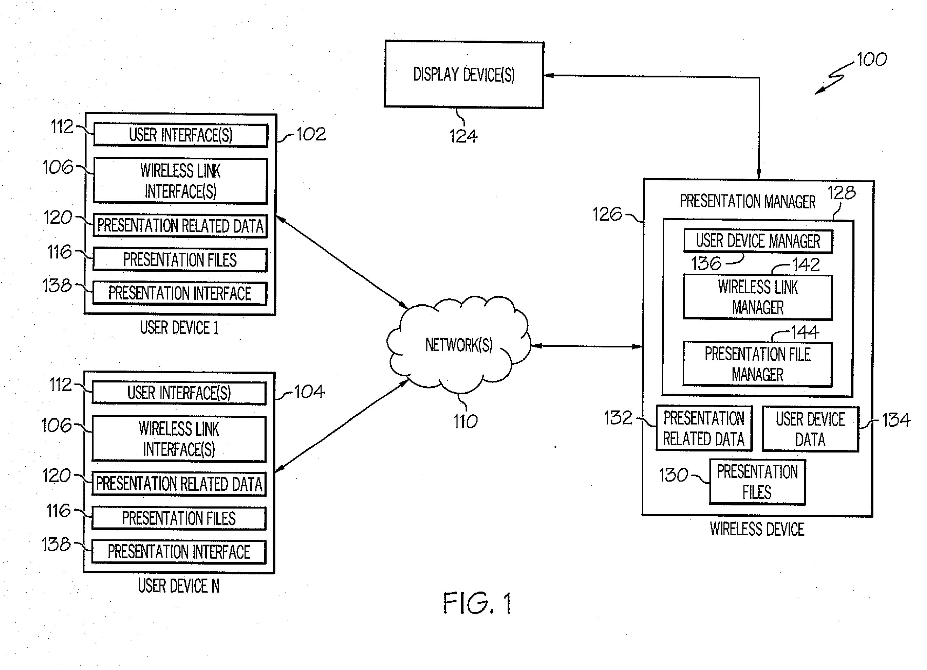

FIG. 1 is a block diagram illustrating one operating environment for managing and providing presentations associated with a plurality of users. The operating environment 100 comprises a plurality of user devices 102, 104. The user devices 102, 104 can be electronic devices such as, but not limited to, wireless communication devices, information processing systems such as notebook and desktop computers, and/or the like. Each user device 102, 104 comprises a communication subsystem comprising one or more wireless link interfaces 106, 108 that allows the device 102, 104 to communicate over one or more wireless networks 110. For example, the user devices 102, 104 can each communication over wireless network(s) such as wireless local area networks, short range wireless networks (e.g., Bluetooth^{®} networks, Zigbee^{®} networks, etc.), infrared based networks, and/or the like.

Each user device 102, 104 comprises a set of user interfaces 112, 114 such as, but not limited to, a speaker(s), a microphone(s), a keyboard(s), a display(s), a touch-screen, a camera, and/or the like. The user devices 102, 104 also comprise presentation files 116, 118 and presentation related data 120, 122. It should be noted that a presentation file 116 and presentation related data 120 can be included within a single file as well. Presentation files 116, 118 are any type of files that comprise information to be displayed to an audience via a display device 124 such as a projector and/or a video display. One non-limiting example of a presentation file is a Microsoft PowerPoint^{®} file. Presentation related data 120, 122 comprises a set of data associated with the presentation files 116, 118. This data 120, 122 can include information that identifies the user of the devices 102, 104; a list of individuals invited to the presentation; a list of other users who are also providing presentation files for a given presentation; information that identifies the user devices 102, 104 or the other users who are the presenters; time, data, and/or location information associated with a given presentation; and/or the like. It should be noted that the user devices 102, 104 and their components are discussed in greater detail below.

FIG. 1 also shows a wireless device 126 that is communicatively coupled to the network 110. It should be noted that the network 110, in one example, is a wireless ad-hoc network created by the user devices 102, 104 and the wireless device 126 being directly coupled to each other via one or more wireless links. It should be also noted that one or more of the user devices 102, 104 can also be coupled to the wireless device 126 via one or more wired connections as well. The wireless device 126 comprises a presentation manager 128, presentation files 130, presentation related data 132, and user device data (e.g., management data) 134.

The locally stored presentation files 130 and presentation related data 132 are the presentation files 116, 118 and presentation related data 120, 122 received from the user devices 102, 104. The user device data 134 is a set of information associated with each user and/or user device 102, 104 that has sent presentation files and presentation related data to the wireless device 126. This data 134 can include presenter queuing data that indicates a presentation order for the presentation files 130 and users associated therewith. For example, this data 134 can indicate that the user associated with User Device_1 102 is to be the first presenter and the user associated with User Device_N 104 is to be the second presenter. The user device data 134 can also be used to maintain a list of devices (and optionally their users) that are coupled to the wireless device 126.

The presentation manager 128 efficiently and automatically manages the multiple user devices 102, 104 coupled to the wireless device 126 and their presentation files for allowing multiple users to take part in a presentation in a seamless fashion. The presentation manager 128 comprises a user device manager 136 that generates the user device data 134. The user device manager 136 manages which user device 102, 104 is able to control a given presentation at a given time. When a user device 102, 104 is given control of the presentation the user of that device 102 is able to interact with the wireless device 126 via a presentation interface 138, 140 for communicating with the wireless device 126 and also for controlling the presentation. In addition, the presentation manager 128 is able to display presentation related information to the user via the interface 138, 140. For example, the presentation manager 128 can display presentation progress information, presenter queuing information, prompts to send presentation files 116, 118 and any related data 120, 122, and other information to the user via the interface 138, 140.

The presentation manager 128 also comprises a wireless link manager 142 that manages the wireless links/connections between the wireless device 126 and the user devices 102, 104. A presentation file manager 144 also resides within the wireless device 126. The presentation file manager 144 transmits the presentation files 130 to the display device 124 based on commands received from a current presenter. In one example, the wireless device 126 is communicatively coupled to the display device 124 via one or more wired and/or wireless mechanisms. Also, the presentation file manager 144 can also send presentation information to the user devices 102, 104 via the presentation interface 138, 140 based on commands received from a current presenter. In other words, a user interface 112, 114 such as a display can be used on the user devices 102, 104 to display a presentation to the users. It should be noted that the wireless device 126 and its components are discussed in greater detail below.

As discussed above, conventional presentations systems either allow one user to be connected to a display device at a time or allow multiple users to be connected to the display device via wireless connections. However, these conventional wireless systems inefficiently manage the users and their data. As will be discussed in more detail below the wireless device 126 overcomes these problems by establishing wireless links between multiple user devices and allowing each of these devices to transmit their presentation files to the device 126. Also, the wireless device 126 comprises various mechanisms for efficiently managing each of the users and their presentation files for providing a seamless presentation experience to the users and their audience.

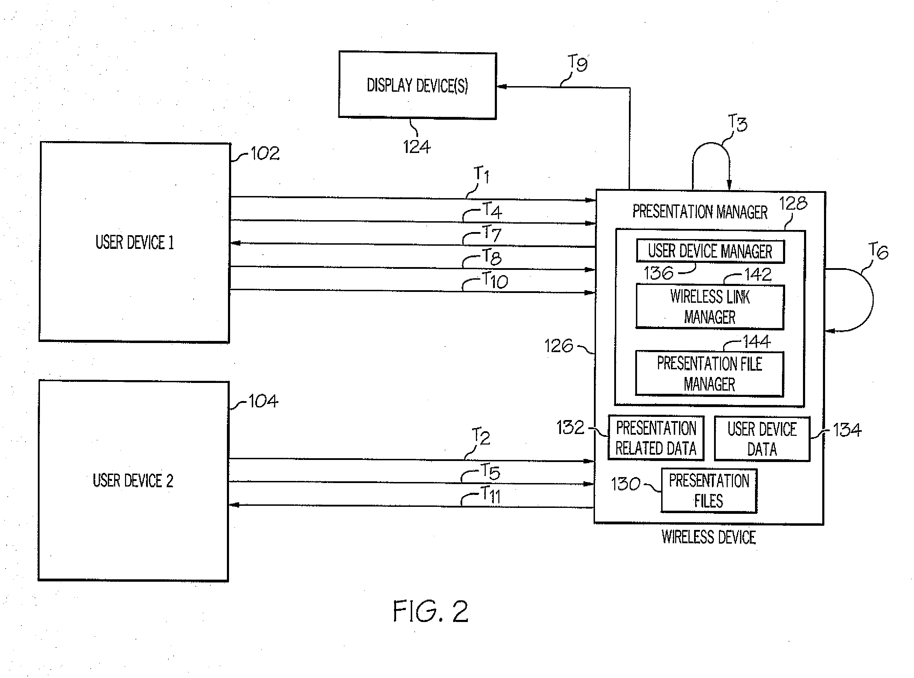

FIG. 2 shows a functional timing diagram illustrating one example of managing multiple presentations associated with multiples users. It should be noted that the sequences shown in FIG. 2 are only given as examples and are not required to be performed in the sequences shown in FIG. 2. As can be seen in FIG. 2 a first user device 102, USER_DEVICE_1, establishes a first wireless communication link with the wireless device 126 via the wireless link interface 106 at the user device 102, at T₁. A second user device 104, USER_DEVICE_2, establishes a second wireless communication link with the wireless device 126 via the wireless link interface 108 at the user device 104, at T₂. In one example, the wireless device 126 is a wireless "pub" device that provides multiple two-way communication paths into, and out of, a single path.

The wireless link manager 142 of the wireless device 126 can manage these wireless links using various mechanisms. For example, the wireless link manager 142 can utilize frequency hopping to manage these links. In this example, multiple user devices connect to the wireless device 126 using the same frequency and each link is assigned to a specific channel. The wireless link manager 142 switches between channels to keep all the connections active. In another example, the wireless link manager 142 utilizes a frequency security key exchange mechanism. In this example, multiple uses devices connect to the wireless device 126 using the same frequency (e.g., 2.4 GHz). A security key is generated between the wireless device 126 and each user device 102, 104. Each security key is different so that multiple connections on the same frequency can occur.

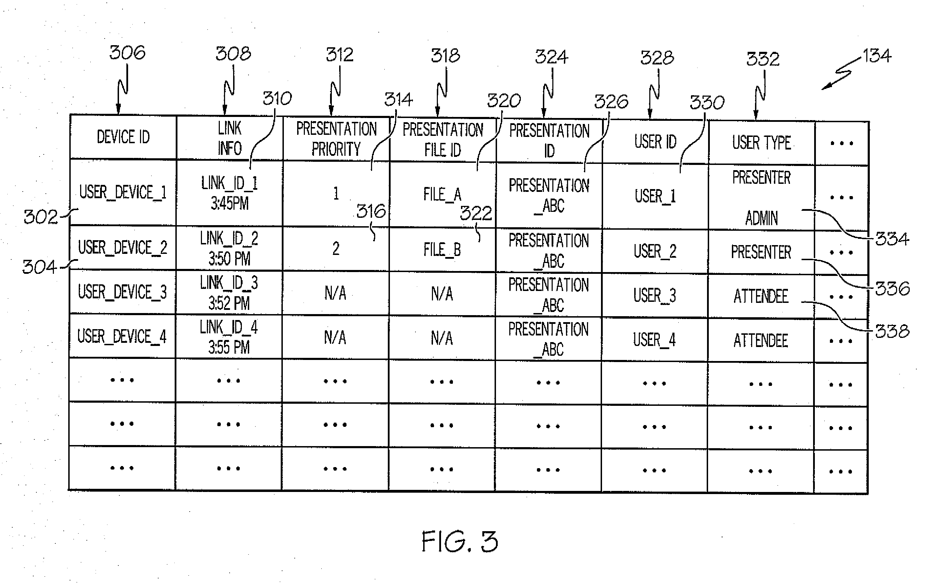

The user device manager 136 in the wireless device 126, at T₃, updates/creates a set of user device data 134 to indicate that the first user device 102 and the second user device 104 have connected to the wireless device 126. In one example, the user device manager 136 stores a unique identifier, such as USER_DEVICE_1 and USER_DEVICE_2, associated with each user device 102, 104 within the user device data 134, as shown in FIG. 3. FIG. 3 shows one example of the user device data 134. It should be noted that each row in the table shown in FIG. 3 corresponds to user device data for a particular user device 102, 104 connected to the wireless device 126. However, other methods for maintaining data can also be used. As can be seen from FIG. 3, the user device manager 136 has updated the user device data 134 to include the user device identifier associated with the first and second user devices 102, 104. For example, the user device manager 136 has added a first entry 302 with "USER_DEVICE_1" and a second entry 304 with "USER_DEVICE_2" under a "Device ID" column 306. It should be noted that this unique identifier information can be sent by each user device 102, 104 when the wireless communication links are first established at T1 and T2. However, the presentation manager 128 can also query the user devices 102, 104 for this information as well.

In addition to this unique device identifier information, the user device manager 136 also updates the user device data 134 with information regarding the wireless link associated with each of the user devices 102, 104. For example, FIG. 3 shows that the user device data 134 comprises a "Link Info" column 308. A first entry 310 under this column includes a link identifier such as "Link_ID_1" that is assigned to a given wireless link by the wireless link manager 142. This entry 310 also includes temporal information such as "3:45 pm" associated with the given link. The link identifier uniquely identifies the link between the wireless device 126 and the given user device 102. The temporal information identifies the time and/or date that the link was established. This information can be used by the presentation manager 128 to assign a presentation priority to each presenter of one or more presentations and for passing control to a given presenter.

For example, FIG. 3 shows that the user device data 134 also includes a "Presentation Priority" column 312 with entries 314, 316 comprising presentation priority information for each user device 102, 104. In particular, FIG. 3 shows that USER_DEVICE_1 has a presentation priority of "1" and USER_DEVICE_2 has a presentation priority of "2". Stated differently, USER_DEVICE_1 is given control of a presentation before USER_DEVICE_2. In one example, the presentation manager 128 automatically assigns presentation priorities to the user devices 102, 104 based on when the user devices established their wireless link with the wireless device 126. For example, as can be seen from FIG. 3, USER_DEVICE_1 established its wireless link at 3:45 pm while USER_DEVICE_2 established its wireless link at 3:50 pm. Therefore, in this example, USER_DEVICE_1 is given a higher presentation priority than USER_DEVICE_2. However, this presentation priority information can also be automatically assigned based on information within the presentation files 130 and presentation related data 132, as is discussed in greater detail below. Alternatively, one or more users associated with a user device 102, 104 can be designated as a moderator or administrator of a presentation. In this example, this user manually assigns the presentation priority information to a user device 102, 104.

Once the user devices 102, 104 have established a link with the wireless device 126 (or vice versa) each user device 102, 104 transmits presentation files 116, 118 and any related presentation related data 120, 122 to the wireless device 126, at T₄ and T₅, respectively. The presentation manager 128 of the wireless device 126, at T₆, stores this information locally as presentation files 130 and presentation related data 132 and updates the user device data 134. For example, the presentation files 130 can include a presentation file identifier, a user identifier that identifies the user associated with the presentation file, and/or the like. The user device manager 136 stores this information in the user device data 134. For example, FIG. 3 shows that a column 318 entitled "Presentation File ID" comprises entries 320, 322 that uniquely identify presentation files associated with a given user device 102, 104. FIG. 3 shows that presentation files identified by the identifier "FILE_A" are associated with USER_DEVICE _1 and presentation files identified by the identifier "FILE_B" are associated with USER_DEVICE_2. The presentation manager 128 uses this information to determine which user device 102, 104 is to have control over which presentation files, as is discussed in greater detail below.

FIG. 3 also shows a column 324 entitled "Presentation ID" that comprises entries that uniquely identify a presentation associated with presentation files 130, user devices 102, 104, and their users. For example, FIG. 3 shows that an entry 326 under this column identifies a presentation "Presentation_ABC". This indicates to the presentation manager 128 that presentation files FILE_A and FILE_B are to be part of Presentation_ABC. FIG. 3 further shows a column 328 entitled "User ID" that comprises entries 330 that uniquely identify a given user of the user device 102, 104 that is associated with the presentation files. The presentation manager 128 can use this information as another mechanism in addition to or instead of the "Device ID" information to determine which device/user is to have control of a presentation at a given point in time. Also, a user device 102, 104 that sends presentation files 130 to the wireless device 126 may not be associated with the user that is to actually perform the presentation of those files. For example, USER_DEVICE_1 can include the presentation file(s) FILE_A, but USER_X associated with USER_DEVICE_X is going to be performing the presentation of the file(s) FILE_A on USER_DEVICE_X. Therefore, in this example, the user identifier under the "User ID" column 328 is "USER_X" instead of "USER_1". This indicates to the presentation manager 128 that even though presentation file(s) FILE_A was received from USER_DEVICE_1, USER_X is to perform the presentation with USER_DEVICE_X.

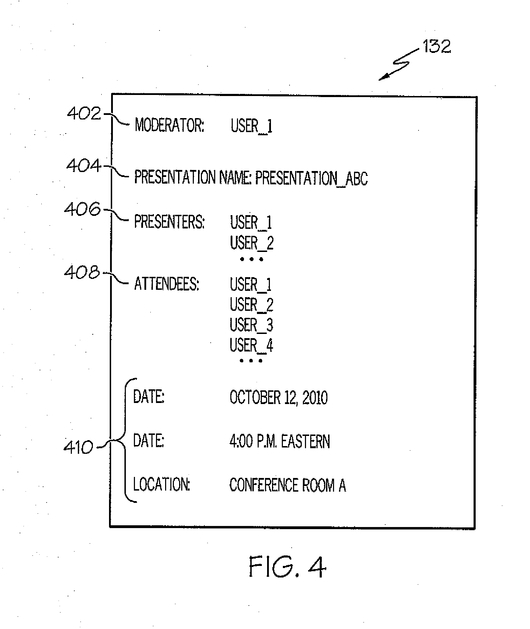

As discussed above, the presentation related data 132 can include information that identifies the user type; a list of individuals invited to the presentation; a list of other users who are also providing presentation files for a given presentation; information that identifies the user devices 102, 104 or the other users who are the presenters; time, data, and/or location information associated with a given presentation; and/or the like. For example, FIG. 4 shows one example of presentation related data 132. In the example shown in FIG. 4, the presentation related data 132 is a calendar/meeting invitation that has been sent from one user to one or more other users for attending a presentation. In one example, this meeting invitation can be seen via email, instant messaging, SMS messaging, or the like and is stored locally on the user devices 102, 104.

As can be seen from FIG. 4, the presentation related data 132 identifies the moderator/administrator 402 (if any) of the presentation. In the example of FIG. 4, USER_1 is identified as the moderator/administrator 402 of the presentation. It should be noted that the moderator/administrator is not required to be a presenter of the presentation. FIG. 4 also shows that a presentation identifier 404 is also included such as "Presentation_ABC", as discussed above with respect to FIG. 3. The presentation related data 132 can also include a list of presenters 406 for the presentation. For example, FIG. 4 shows that USER_1 and USER_2 are presenters for Presentation_ABC. A list of attendees 408 can also be included in the presentation related data 132. For example, FIG. 4 shows that USER_1, USER_2, USER_3, and USER_4 are the selected attendees for Presentation_ABC. Scheduling information 410 such as, but not limited to, data, time, and location information can also be included in the presentation related data 132.

In addition to using the presentation files 130, the user device data 134 can be further updated based on the presentation related data 132. For example, the user device data 134 in the example of FIG. 3 includes a "User Type" column 332 that includes entries 334, 336, 338 that identify a user type for each user associated with a user device with respect to the given presentation. For example, based on the presentation related data 132, the user device manager 136 has updated the user device data 134 to indicate that USER_1 associated with USER_DEVICE_1 is a moderator/administrator of Presentation_ABC and is also a presenter. It should be noted that a moderator/administrator can be the user who owns the wireless device 126, has connected to the wireless device 126 first, or the like. The user device data 134 in FIG. 3 also shows that USER_2 associated with USER_DEVICE_2 is also a presenter for Presentation_ABC. FIG. 3 further shows that USER_3 and USER_4 are attendees of Presentation_ABC and are not presenters. Therefore, presentation priorities are not assigned to these users. Presentation file identifiers are also not associated with these users since they have not transmitted presentation files to the wireless device 126.

Returning now to FIG. 2, the presentation manager 128 of the wireless device 126, at T₇, selects a user device 102 and passes control to that device 102 for a given presentation. For example, the presentation manager 128 analyzes the user device data 134 to identify the user/device with the highest presentation priority. In the example of FIG. 3, this user/device is identified as USER_1/USER_DEVICE_1. Therefore, the presentation manager 128 passes control to USER_DEVICE_1. The user associated with this user device interacts with the wireless device 126 via the presentation interface 138. For example, the user is able to select a given presentation slide and/or function/operation associated with a slide and have the wireless device 126 transmit this information to the display device 124. The wireless device 126 can also send information to the user device 102 that is displayed to the user via the interface 138. For example, the wireless device 126 can notify the user via the presentation interface 138 that he/she now has control of the presentation.

Control can be passed/allocated to a user device in a number of different ways. In one example, each user device 102, 104 is assigned a given channel/band when connecting to the wireless device 126. This channel/band is identified under the "Link Info" column of FIG. 3 such as the Link_ID information, as discussed above. In this embodiment, the presentation manager 128 sends and receives information over the channel/band associated with the user device with control, i.e., the current presenter. The presentation manager 128 can also send information to the other user devices over their respective channels while another device is allocated control of the presentation. In another example, the moderator/administrator, via the presentation interface 128, instructs the presentation manager 128 of the wireless device 126 as to which user device 102, 104 to pass control to.

Once the user device 102 receives control of the presentation, the user of this device, via the presentation interface 138, controls the presentation files associated with his/her device. For example, the user via the interface 138 sends a "start" instruction to the wireless device 126, at T8. The presentation manager 126, via the presentation file manager 144, then identifies the presentation files, FILE_A in this example, associated with the current presenter user device 102, USER_DEVICE_1, in this example. The presentation manager 128 then sends at least a portion (such as a one or more presentation slides) of presentation FILE_A to the display device 124 to be displayed to the audience, at T9. It should be noted that the presentation file identification process can occur prior to receiving the first presentation instruction from the presenter user device. Optionally, the wireless device 126 can also send the portion of the presentation FILE_A to the presenter user device 102 as well. This allows the user to also see the presentation slide on his/her device. Also, the wireless device 126 can send the portion of the presentation FILE_A to the other non-presenting devices 104 as well. This allows a non-presenter device to see the currently presentation on his/her device as compared to only having to view the display device 124. The presentation manager 128 can also send other information to the user devices 102, 104 such as presentation progress information (e.g., 50% of the presentation has been viewed); current presenter information such as, but not limited, the presenter's name; a list of subsequent presenters, or the like.

However, if the user is working with a local version of the presentation file, this step is not performed. For example, the user can work with a local version of the presentation file o his/her device 102, 104 and as the user interacts with this file (e.g., presentation actions such as highlights an item on a slide, advances to the next slide, plays an animation, etc.) corresponding instructions are sent to the wireless device 126. The wireless device 126 then applies those instructions to the corresponding presentation file at the wireless device 126 and generates an output based thereon that is transmitted to the display device 124. The display device 124 then displays the portion of the presentation file as currently being viewed on the presenter user device 102.

The operations at T8 and T9 continue until the presentation manager 128, presenter, and/or moderator/administrator indicate that the current presenter is finished, at T10. For example, the presentation manager 128 can monitor the presentation and determine that the current presentation slide is the last presentation slide (or within a given number of slides from the last slide) in the current presentation file. Alternatively, the moderator/administrator can select an option via the presenter interface 138 that indicates to the wireless device 126 that the current presenter has finished or is about to complete his/her presentation.

The presentation manager 128, at T11, then transfers presentation control to the next presenter. For example, the presentation manager 128, via the user device manager 136, analyzes the user device data 134 to identify the next user/device associated with the next presentation priority value. Using the example of FIG. 3, the presentation manager 128 determines that USER_2 is to be the next presenter and is associated with USER_DEVICE_2. Alternatively, the moderator/administrator can use the presentation interface 138 to select the next presenter. This selection is then sent to the wireless device 126 so the selected presenter can be given control of the presentation. Any delay experienced during the presentation as a result of switching presenters is minimized since the presentation files of each presenter are stored locally on the wireless device 126.

Control can be passed, for example, by switching wireless communication channels/bands based on the wireless link information 308 associated with the current presenter (e.g., LINK_ID_1), as discussed above with respect to FIG. 3. Alternatively, the presentation manager 128 can disable presenter functions on the presentation interfaces 138, 140 of the other user devices. Also, the presentation manager 128 can ignore requests received from other user devices that have not been selected as the current presenter. The operations discussed above with respect to T7 to T11 are then repeated until an exit event has occurred. An exit event an instruction received from the moderator/administrator that the end of the presentation has occurred or an instruction to terminate the current presentation, a determination by the presentation manager 128 that the end of the presentation has occurred, and/or the like.

As can be seen from the above discussion, the wireless device 126 provides an efficient and robust mechanism for managing multiple users associated with a presentation and their presentation related data. The wireless device 126 provides a seamless presentation experience for the presenters and the audience because the presentation files are stored locally on the device 126. This allows any delay experienced when switching between presenters to be minimized or eliminated.

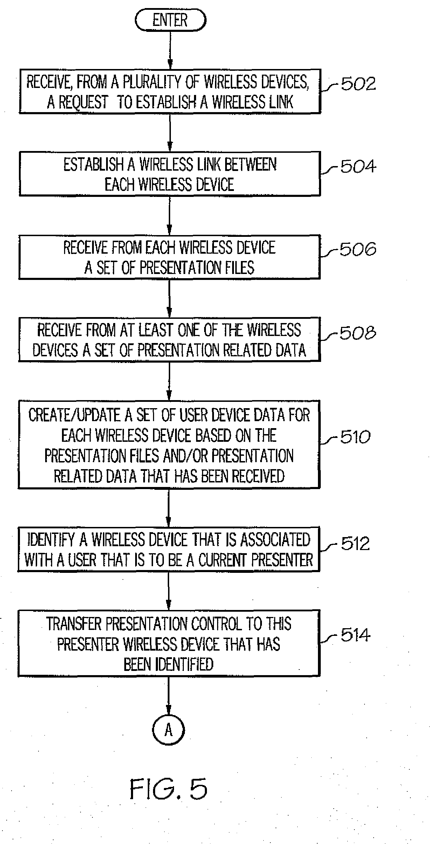

FIGs. 5-6 are flow diagrams for a multiple user, multiple presentation management process 500. The multiple user, multiple presentation management process 500 automatically and simultaneously establishes wireless links between multiple user devices 102, 104 and a wireless device 126 and manages presentation related data and a presentation(s) associated therewith as discussed above with respect to FIGs. 1-4. The multiple user, multiple presentation management process 500 is performed by the presentation manager 128 of the wireless device 126.

The multiple user, multiple presentation management process 500 begins by receiving, at 502, a request to establish a wireless link from a plurality of user devices 102, 104. Wireless links, at 504, are simultaneously established between each of the user devices 102, 104 and the wireless device 126. As a result of establishing the wireless links, a set of presentation files 116, 118, at 506, is received from each of the user devices 102, 104 and are stored locally. Also, a set of presentation related data 120, 122 such as, but not limited to, a calendar invitation associated with a presentation, at 508, is received from at least one of the user devices 102, 104 and is stored locally. A set of user device data 134 is created/updated, at 510, based on at least one of the presentation files 130 and presentation related data 132 that is stored locally on the wireless device 126.

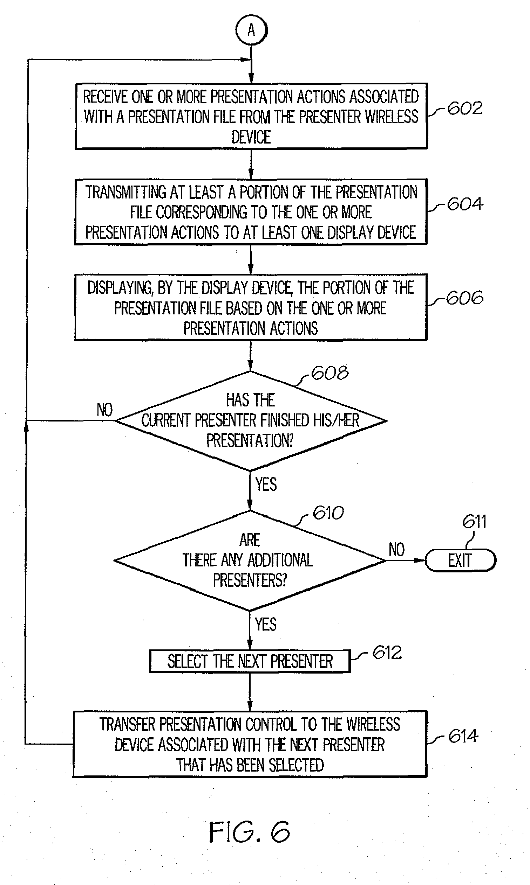

A user device 102 that is associated with a user that is to be a current presenter of a presentation, at 512, is identified. As discussed above with respect to FIGs. 2-4, the presentation manager 128 can analyze the user device data 134 to identify a user that is to be a presenter and his/her user device 102. A moderator/administrator can also inform the presentation manager 128 of the user that has been selected to be the current presenter. Presentation control, at 514, is then passed to this user device 102. The control then flows to Entry Point A of FIG. 6.

One or more presentation actions associated with a presentation file 130, at 602, are received from the presenter user device 102. For example, the presenter associated with the presenter user device 104 can select commands such as "show presentation slide 1", "show next slide", "play animation", or the like from the presentation interface 138 and send these commands to the presentation manager 128. At least a portion (e.g., presentation slide 1) of the presentation file 130 corresponding to the current presenter and the one or more actions, at 604, is transmitted to at least one display device 124. The portion of the presentation, at 606, is then displayed by the display device 124 based on the one or more presentation actions. For example, if the presentation action indicates to display presentation slide 1 the presentation manager 128 sends slide 1 to the display device 124 to be displayed.

A determination is made, at 608, that determines if the current presenter has finished his/her presentation. If the result of this determination is negative the control returns to 602. If the result of this determination is positive, another determination is made, at 610, that determines if there are any additional presenters. If the result of this determination is negative the control flow exits at step 611. If the result of this determination is positive, the next presenter, at 612, is selected, as discussed above. Presentation control, at 614, is transferred to the user device 104 associated with the next presenter that has been selected. The control flow then returns to step 602 where the above steps are performed for each presenter.

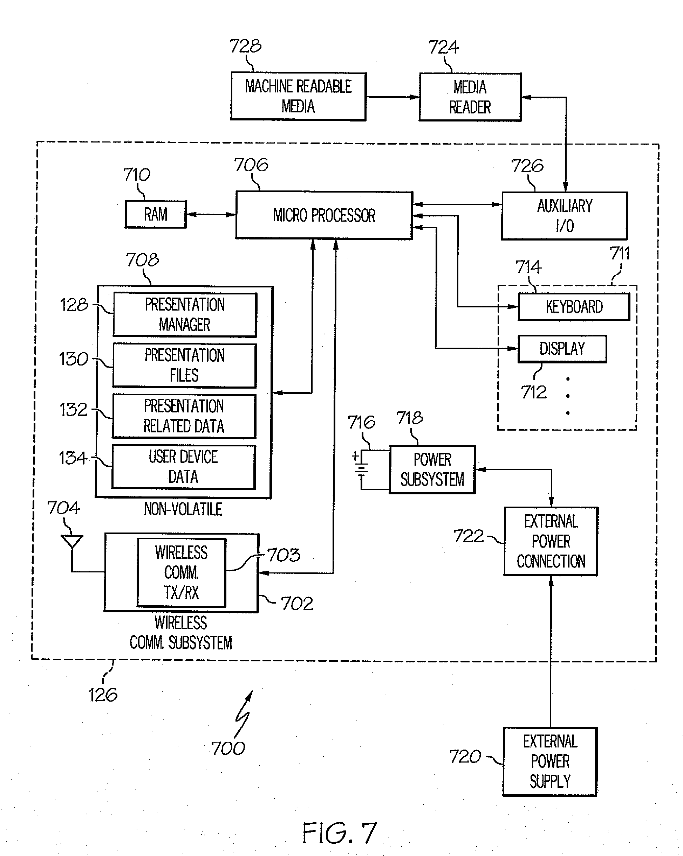

FIG. 7 is a block diagram of an exemplary electronic device and associated components 700 in which the systems and methods disclosed herein may be implemented. In this example, an electronic device 126 is a wireless device discussed above with respect to FIGs. 1-6. The illustrated electronic device 126 is an example electronic device that includes two-way wireless communications functions. Such electronic devices incorporate a wireless communication subsystem 702 that comprises a wireless communication transceiver 703 and associated circuits and components such as one or more antenna elements 704.

The electronic device 126 includes a microprocessor 706 that controls the overall operation of the electronic device 216. The microprocessor 706 interacts with the above wireless communication subsystem elements and also interacts with other device subsystems such as non-volatile memory 708, random access memory (RAM) 710, optional user interfaces 711 (such as a display 712, a keyboard 714, and other similar devices), a power subsystem, and any other device subsystems.

A battery 716 is connected to a power subsystem 718 to provide power to the circuits of the electronic device 126. The power subsystem 718 includes power distribution circuitry for providing power to the electronic device 126 and also contains battery charging circuitry to manage recharging the battery 716. The external power supply 720 is able to be connected to an external power connection 722.

Operating system software used by the microprocessor 706 is stored in non-volatile memory 708. Also, the presentation manager 128, presentation files 130, presentation related data 132, and user device data 134 are also stored within the non-volatile memory 708. Further examples are able to use a battery backed-up RAM or other non-volatile storage data elements to store operating systems, presentation manager 128, presentation files 130, presentation related data 132, and user device data 134, other executable programs, or any combination of the above. It should be noted that the presentation manager 128 can also be implemented in hardware as well. The operating system software, device application software, or parts thereof, are able to be temporarily loaded into volatile data storage such as RAM 710. Data received via wireless communication signals or through wired communications are also able to be stored to RAM 710.

The microprocessor 706, in addition to its operating system functions, is able to execute software applications on the electronic device 126. A predetermined set of applications that control basic device operations, including at least data and voice communication applications, is able to be installed on the electronic device 126 during manufacture.

During wireless communication operations, a received signal such as a short range wireless communication signal is processed by the wireless communication subsystem 702 and the presentation manager 128, and communicated data is provided the microprocessor 706. Depending on conditions or statuses of the electronic device 126, one or more particular functions associated with a subsystem circuit may be disabled, or an entire subsystem circuit may be disabled.

A media reader 724 is able to be connected to an auxiliary I/O device 726 to allow, for example, loading computer readable program code of a computer program product into the electronic device 126 for storage into non-volatile memory 708. In one example, computer readable program code includes instructions for performing the multiple user, multiple presentation management process 500 discussed above. One example of a media reader 724 is an optical drive such as a CD/DVD drive, which may be used to store data to and read data from a computer readable medium or storage product such as machine readable media (computer readable storage media) 728. Examples of suitable computer readable storage media include optical storage media such as a CD or DVD, magnetic media, or any other suitable data storage device. Computer readable program code can be alternatively provided to the electronic device 126 through the wireless communication subsystem 702.

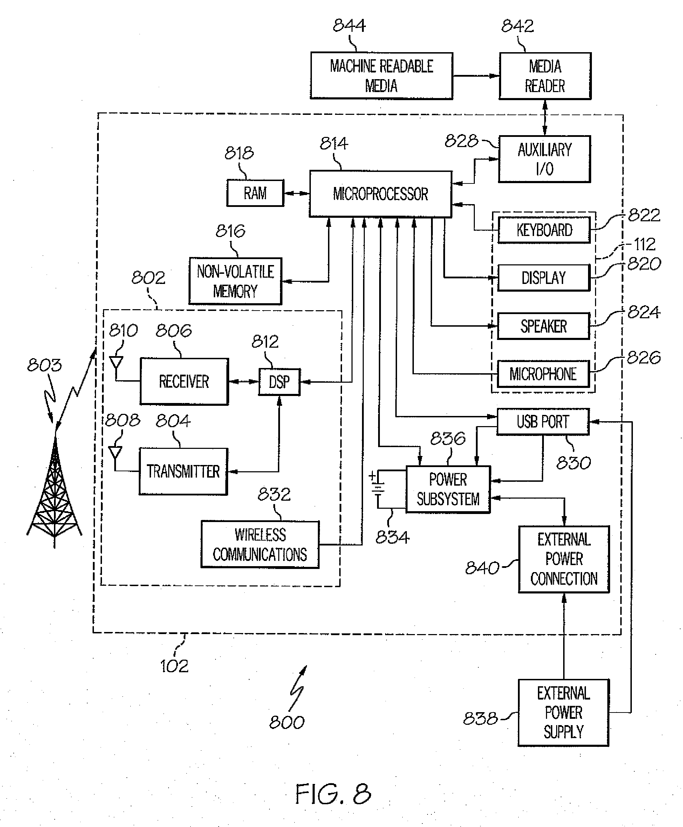

FIG. 8 is a block diagram of an exemplary electronic device and associated components 800 in which the systems and methods disclosed herein may be implemented. In this example, an electronic device is the user device 102, 104 discussed above with respect to FIGs. 1-7 and is a wireless two-way communication device with voice and data communication capabilities. Such electronic devices communicate with a wireless voice or data network 803 using a suitable wireless communications protocol. Wireless voice communications are performed using either an analog or digital wireless communication channel. Data communications allow the electronic device 102 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated electronic device 102 is an example electronic device that includes two-way wireless communications functions. Such electronic devices incorporate a communication subsystem 802 comprising elements such as a wireless transmitter 804, a wireless receiver 806, and associated components such as one or more antenna elements 808 and 810. A digital signal processor (DSP) 812 performs processing to extract data from received wireless signals and to generate signals to be transmitted. The particular design of the communication subsystem 802 is dependent upon the communication network and associated wireless communications protocols with which the device is intended to operate.

The electronic device 102 includes a microprocessor 814 that controls the overall operation of the electronic device 102. The microprocessor 814 interacts with the above described communications subsystem elements and also interacts with other device subsystems such as non-volatile memory 816, random access memory (RAM) 818, user interfaces 112 (such as a display 820, a keyboard 822, a speaker 824, and a microphone 826), auxiliary input/output (I/O) device 828, USB Port 830, short and long range communication subsystems, a power subsystem and any other device subsystems.

A battery 834 is connected to a power subsystem 836 to provide power to the circuits of the electronic device 102. The power subsystem 836 includes power distribution circuitry for providing power to the electronic device 102 and also contains battery charging circuitry to manage recharging the battery 834. The external power supply 838 is able to be connected to an external power connection 840 or through a USB port 830.

The USB port 830 further provides data communication between the electronic device 102 and one or more external devices, such as an information processing system. Data communication through USB port 830 enables a user to set preferences through the external device or through a software application and extends the capabilities of the device by enabling information or software exchange through direct connections between the electronic device 102 and external data sources rather than via a wireless data communication network. In addition to data communication, the USB port 830 provides power to the power subsystem 836 to charge the battery 834 or to supply power to the electronic circuits, such as microprocessor 814, of the electronic device 102.

Operating system software used by the microprocessor 814 is stored in non-volatile memory 816. Further examples are able to use a battery backed-up RAM or other non-volatile storage data elements to store operating systems, other executable programs, or any combination of the above. The operating system software, device application software, or parts thereof, are able to be temporarily loaded into volatile data storage such as RAM 818. Data received via wireless communication signals or through wired communications are also able to be stored to RAM 818.

The microprocessor 814, in addition to its operating system functions, is able to execute software applications on the electronic device 102. A predetermined set of applications that control basic device operations, including at least data and voice communication applications, is able to be installed on the electronic device 102 during manufacture. Examples of applications that are able to be loaded onto the device may be a personal information manager (PIM) application having the ability to organize and manage data items relating to the device user, such as, but not limited to, e-mail, calendar events, voice mails, appointments, and task items.

Further applications may also be loaded onto the electronic device 102 through, for example, a wireless network 803, an auxiliary I/O device 828, USB port 830, communication subsystem 802, or any combination of these interfaces. Such applications are then able to be installed by a user in the RAM 818 or a non-volatile store for execution by the microprocessor 814.

In a data communication mode, a received signal such as a text message or web page download is processed by the communication subsystem, including wireless receiver 806 and wireless transmitter 804, and communicated data is provided the microprocessor 814, which is able to further process the received data for output to the display 820, or alternatively, to an auxiliary I/O device 828 or the USB port 830. A user of the electronic device 102 may also compose data items, such as e-mail messages, using the keyboard 822, which is able to include a complete alphanumeric keyboard or a telephone-type keypad, in conjunction with the display 820 and possibly an auxiliary I/O device 828. Such composed items are then able to be transmitted over a communication network through the communication subsystem.

For voice communications, overall operation of the electronic device 102 is substantially similar, except that received signals are generally provided to a speaker 824 and signals for transmission are generally produced by a microphone 826. Alternative voice or audio I/O subsystems, such as a voice message recording subsystem, may also be implemented on the electronic device 102. Although voice or audio signal output is generally accomplished primarily through the speaker 824, the display 820 may also be used to provide an indication of the identity of a calling party, the duration of a voice call, or other voice call related information, for example.

Depending on conditions or statuses of the electronic device 102, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short range/long range wireless communications subsystem 832 is a further optional component which may provide for communication between the electronic device 102 and different systems or devices such as the wireless device 126. However these different systems or devices need not necessarily be similar devices as discussed above. The wireless communications subsystem 832 comprises one or more wireless transceivers, optionally associated circuits and components, and an optional infrared device for communicating over various networks such implementing one or more wireless communication technologies such as, but not limited to, Bluetooth^{®} and/or a wireless fidelity technologies.

A media reader 842 is able to be connected to an auxiliary I/O device 828 to allow, for example, loading computer readable program code of a computer program product into the electronic device 102 for storage into non-volatile memory 816. One example of a media reader 842 is an optical drive such as a CD/DVD drive, which may be used to store data to and read data from a computer readable medium or storage product such as machine readable media (computer readable storage media) 844. Examples of suitable computer readable storage media include optical storage media such as a CD or DVD, magnetic media, or any other suitable data storage device. Media reader 842 is alternatively able to be connected to the electronic device through the USB port 830 or computer readable program code is alternatively able to be provided to the electronic device 102 through the wireless network 803.

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. An electronic device (126) for managing a presentation comprising a plurality of presentation files (13) associated with a plurality of users, the electronic device (126) comprising:
a memory (708);
a processor (706) communicatively coupled to the memory (708); and
a presentation manager (128) communicatively coupled to the memory (708) and the processor (706), the presentation manager (128) for performing a method comprising:
establishing a wireless link (504) between each user wireless device (102, 104) in a plurality of user wireless devices;
receiving (506), in response to the establishing, a set of presentation files (130) from each user wireless device (102, 104) in the plurality of user wireless devices over the wireless link, the set of presentation files (130 being associated with a presentation;
receiving (508), in response to the establishing, a set of presentation related data (132) from at least one of the user wireless devices (102, 104) in the plurality of user wireless devices, the set of presentation related data (132) at least identifying a plurality of presenters associated with the set of presentation files (130);
identifying a presentation priority associated with each of the presenters in the plurality of presenters (512);
selecting one of the presenters based on the presentation priority that has been identified (512); and
allocating (514) a control of the presentation associated with the set of presentation files (130) to a user wireless device (102, 104) in the plurality of user wireless devices that is associated with the presenter that has been selected.

2. The electronic device (126) of claim 1, the set of presentation related data (132) is one of:
a calendar invitation;
an email;
a short message service message; and
a multimedia message service message.

3. The electronic device (126) of any one of claims 1 or 2, the method further comprising:
generating (510) a set of management data (134) based on at least one of the set of presentation files (130) and the set of presentation related data (132), the set of management data (134) comprising at least the presentation priority associated with each of the presenters in the plurality of presenters.

4. The electronic device (126) of claim 3, the identifying the presentation priority comprises:
analyzing the set of management data (134).

5. The electronic device (126) of any one of claims 1, 2, 3, or 4, the identifying the presentation priority further comprises:
receiving (508) a set of presentation priority information from a user wireless device (102, 104) in the plurality of user wireless devices that is designated as an administrator of the presentation.

6. The electronic device (126) of any one of claims 1, 2, 3, or 5,
the presentation priority is based on an order of establishing the wireless link (504) between each user wireless device (102, 104) in the plurality of user wireless devices.

7. The electronic device (126) of any one of claims 1, 2, 3, 4, 5, or 6, the method further comprising:
receiving, in response to allocating the control, a set of presentation instructions (602) from the user wireless device (102, 104); and
transmitting (604) at least a portion of the set of presentation files (130) associated with the user wireless device (102, 104)to at least one display device (124) based on the set of presentation instructions that have been received.

8. A method for managing a presentation comprising a plurality of presentation files associated with a plurality of users, the method comprising:
establishing a wireless link (504) between each user wireless device (102, 104) in a plurality of user wireless devices;
receiving (506), in response to the establishing, a set of presentation files (130) from each user wireless device (102, 104) in the plurality of user wireless devices over the wireless link, the set of presentation files (130 being associated with a presentation;
receiving (508), in response to the establishing, a set of presentation related data (132) from at least one of the user wireless devices (102, 104) in the plurality of user wireless devices, the set of presentation related data (132) at least identifying a plurality of presenters associated with the set of presentation files (130);
identifying a presentation priority associated with each of the presenters in the plurality of presenters (512);
selecting one of the presenters based on the presentation priority that has been identified (512); and
allocating (514) a control of the presentation associated with the set of presentation files (130) to a user wireless device (102, 104) in the plurality of user wireless devices that is associated with the presenter that has been selected.

9. The method of claim 8, the set of presentation related data (132) is one of:
a calendar invitation;
an email;
a short message service message; and
a multimedia message service message.

10. The method of any one of claims 8 or 9, further comprising:
generating (510) a set of management data (134) based on at least one of the set of presentation files (130) and the set of presentation related data (132), the set of management data (134) comprising at least the presentation priority associated with each of the presenters in the plurality of presenters.

11. The method of claim 10, the identifying the presentation priority comprises:
analyzing the set of management data (134).

12. The method of any one of claims 8, 9, 10, or 11, the identifying the presentation priority further comprises:
receiving (508) a set of presentation priority information from a user wireless device (102,104) in the plurality of user wireless devices that is designated as an administrator of the presentation.

13. The method of any one of claims 8, 9, 10, 11, or 12,
the presentation priority is based on an order of establishing the wireless link (504) between each user wireless device (102, 104) in the plurality of user wireless devices.

14. The method of any one of claims 8, 9, 10, 11, 12, or 13, further comprising:
receiving, in response to allocating the control, a set of presentation instructions (602) from the user wireless device (102, 104); and
transmitting (604) at least a portion of the set of presentation files (130) associated with the user wireless device (102, 104)to at least one display device (124) based on the set of presentation instructions that have been received.

15. A computer program for instructing a computer to perform the method of any one of claims 8, 9, 10, 11, 12, 13, or 14.
